(19) Europäisches Patentamt
European Patent Office
Office européen des brevets

(11) Veröffentlichungsnummer: **0 110 290**
**B1**

(12) # EUROPÄISCHE PATENTSCHRIFT

(45) Veröffentlichungstag der Patentschrift: **04.02.87**

(21) Anmeldenummer: **83111639.7**

(22) Anmeldetag: **22.11.83**

(51) Int. Cl.[4]: **C 08 L 83/12** // D06M15/37, D06M15/227, (C08L83/12, 23:06)

(54) **Wässrige Silicondispersionen, Verfahren zu deren Herstellung und Verwendung als Textilbehandlungsmittel.**

(30) Priorität: **04.12.82 DE 3244955**

(43) Veröffentlichungstag der Anmeldung: **13.06.84 Patentblatt 84/24**

(45) Bekanntmachung des Hinweises auf die Patenterteilung: **04.02.87 Patentblatt 87/6**

(84) Benannte Vertragsstaaten: **BE DE FR GB IT NL**

(56) Entgegenhaltungen:
**DE-A-1 801 325**
**DE-A-2 359 966**
**FR-A-1 474 559**
**FR-A-2 018 298**
**FR-A-2 288 167**
**GB-A-1 261 784**

(73) Patentinhaber: **BAYER AG, Konzernverwaltung RP Patentabteilung, D-5090 Leverkusen 1 Bayerwerk (DE)**

(72) Erfinder: **Steinberger, Helmut, Dr., Winand- Rossi-Strasse 36, D-5090 Leverkusen 1 (DE)**
Erfinder: **Kirschnek, Helmut, Dr., Hans- Sachs-Strasse 39, D-5090 Leverkusen 1 (DE)**
Erfinder: **Pfeiffer, Josef, Ing.- Grad., Maashofstrasse 25, D-5090 Leverkusen 3 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 110 290 B1

LIBER, STOCKHOLM 1987

**Beschreibung**

Die vorliegende Erfindung betrifft lager- und temperaturstabile, wäßrige Dispersionen auf Silcon-Basis, die Herstellung dieser Dispersionen durch ein Emulgierverfahren und ferner die Verwendung derartiger Dispersionen als Textilbehandlungsmittel.

Gegenstand der vorliegenden Erfindung sind wäßrige Dispersionen enthaltend

A) 1-30 Gew.-Teile eines über Alkylenoxy-Brücken vernetzten polyethersiloxans der allgemeinen Formel

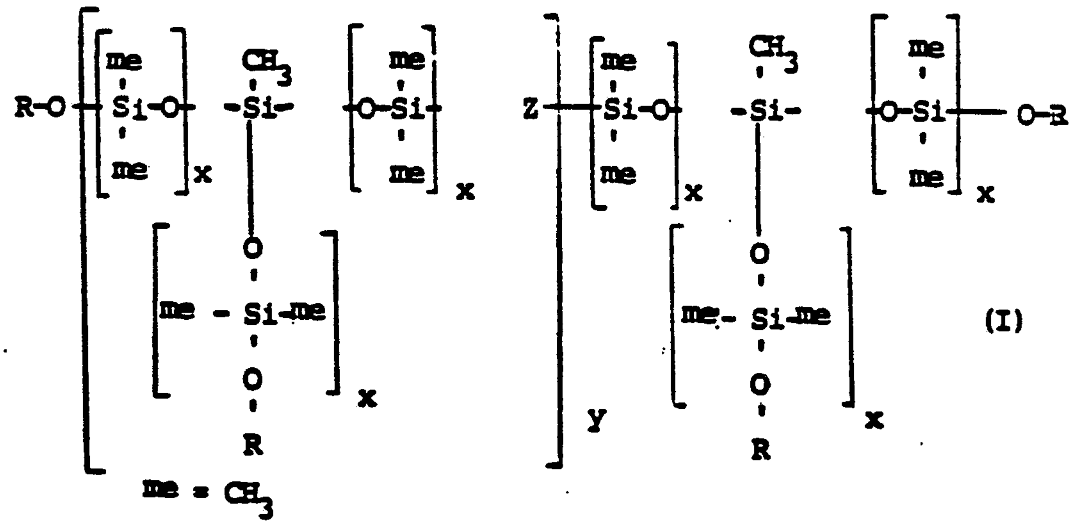

(I)

wobei Z für einen zweiwertigen Alkylenoxyrest
mit 2-8 C-Atomen, bevorzugt den Butylenoxyrest,
R für einen Polyetherrest,
x für einen Wert zwischen 2 und 25
y für einen Wert zwischen 1 und 9 steht,

B) 1-40 Gew.-Teile eines hochmolekularen Polyethylen mit einem mittleren Molgewicht von 15000-50000,

C) 1-10 Gew.-Teile eines anionischen Emulgators,

D) 0-15 Gew.-Teile eines nicht-ionogenen Emulgators und

E) 2-97 Gew.-Teile Wasser.

Gegenstand der vorliegenden Erfindung ist ferner ein Verfahren zur Herstellung der wäßrigen Dispersionen gemäß Anspruch 1, welches dadurch gekennzeichnet ist, daß man eine wäßrige Polyethylendispersion, die 5-40 Gew.-% Polyethylen sowie 1-10 Gew.-% anionische Emulgatoren sowie gegebenenfalls noch 1-15 Gew.-% nichtionogene Emulgatoren enthält mit einer Mischung bestehend aus 8-90 Gew.-% eines vernetzten Polyethersiloxans der Formel I, 0,1-18 Gew.-% anionischen und gegebenenfalls nichtionischen Emulgatoren sowie 1-92 % Wasser versetzt.

Die erfindungsgemäße Herstellung der Dispersionen geschieht bei Temperaturen von 20-60°C nach der Verfahrensweise a) oder b): nach a) indem man eine wäßrige Polyethylendispersion vorlegt, die 5-40 Gew.-% Polyethylen sowie 1-10 Gew.-% anionische Emulgatoren und gegebenenfalls noch 1-15 Gew.-% nichtionogene Emulgatoren enthält, und diese unter stetiger Rührung langsam mit einer Mischung oder einer Emulsion versetzt, die sich aus 8-90 Gew.-% eines vernetzten Polyethersiloxans der allgemeinen Formel I, 0,1-18 Gew.-% anionischer und gegebenenfalls nichtionischer Emulgatoren sowie 1-92 Gew.-% Wasser zusammensetzt; oder umgekehrt nach b) indem man eine Mischung oder Emulsion vorlegt, die aus 8-90 Gew.-% eines vernetzten Polyethersiloxans der allgemeinen Formel I, 0,1-18 Gew.-% anionischer und gegebenenfalls nichtionischer Emulgatoren sowie 1-92 Gew.-% Wasser besteht und in diese eine wäßrige Polyethylendispersion langsam einrührt, die 5-40 Gew.-% Polyethylen sowie 1-10 Gew.-% anionische Emulgatoren und gegebenenfalls noch 1-15 Gew.-% nichtionogene Emulgatoren enthält.

Dabei kann das Mischungsverhältnis der emulgatorhaltigen Polyethylendispersion und der emulgatorhaltigen Polyethersiloxan-Komponente in den oben angegebenen Grenzen schwanken in Abhängigkeit von dem vorgesehenen Anwendungszweck.

Für die meisten praktischen Anwendungen als Textilbehandlungsmittel können Konzentrate der Dispersionen eingesetzt werden, deren Anteil an Polyethersiloxan zwischen 5 und 30 Gew.-% und deren Gehalt an hochmolekularem Polyethylen zwischen 5 und 40 Gew.-% liegt. Vorzugsweise werden wäßrige Dispersionen, die 5 bis 15 Gew.-% eines Polyethersiloxans der Formel I und 5 bis 20 Gew.-% eines Polyethylens sowie anionische Emulgatoren enthalten, eingesetzt.

Während die erfindungsgemäßen Dispersionen zweckmäßig stets den anionaktiven Emulgator enthalten müssen, werden Anteile an nichtionischen Emulgatoren nur für den Fall benötigt, daß bei einer praktischen Verwendung der Dispersionen eine hohe Salzbeständigkeit der Anwendungsflotten erforderlich ist.

Die auf diese Weise herstellbaren Dispersionen haben ein milchigweißes Aussehen, wobei der mittlere Teilchendurchmesser bei 80 - 800 mμ liegt. Sie weisen eine unerwartet hohe Lagerstabilität von 1-2 Jahren bei Temperaturen von 10-45°C auf, was bekanntlich als sehr ungewöhnlich für siliconhaltige Dispersionen angesehen werden muß.

Die im Rahmen der Erfindung verwendbaren Polyether-Siloxan-Copolymere entsprechen der allgemeinen Formel I. Es handelt sich hierbei um über Butylenoxybrücken verknüpfte Polyethersiloxane. Ihre Herstellung erfolgt nach in der DE-A- 2 802 668 beschriebenem Verfahren durch Umsetzung der entsprechenden Acyloxypolysiloxane der Formel

$$CH_3\text{-}Si\ (O\overset{\displaystyle CH_3}{\underset{\displaystyle CH_3}{Si}})_n\ U_{3-a-b}\ CL_a\ W_b \quad ,$$

wobei

W einen $C_4F_9SO_3$-Rest,

>U einen Rest einer niederen einbasichen Carbonsäure mit bis zu 4 C-Atomen, vorzugsweise einen Acetatrest bedeutet

und n eine Zahl zwischen 3 und 80, vorzugsweise eine Zahl zwischen 6 und 30 ist,

a ist gleich oder kleiner 1 und

b gleich oder kleiner 0,5, wobei

a + b gleich oder kleiner 1 ist,

mit auf Butanol gestarteten Polyethern, die Oxethylen- und Oxpropyleneinheiten in wechselnder Folge beinhalten.

Die Steuerung des Verzweigungsgrades erfolgt gleichzeitig mit der Verknüpfung der Siloxan- und Polyoxalkylenblöcke dadurch, daß die monofunktionellen Polyoxalkylenblöcke mit difunktionellen Verbindungen in berechneten Verhältnissen gemischt werden und gleichzeitig mit dem gewählten Polyorganopolysiloxan in einem organischen Lösungsmittel in Gegenwart eines Protonenfängers umgesetzt werden.

Die Auswahl aus den möglichen Polysiloxan-Polyoxalkylenverbindungen der Formel I richtet sich weitgehend nach dem vorgesehenen Anwendungszweck bei der Textilausrüstung.

Werden beispielsweise bevorzugt hydrophile, antistatische Ausrüstungseffekte gewünscht, so wird man ein Polyether-Siloxan-Copolymer nach der Formel I auswählen mit einem polyetherrest der Formel

$C_nH_{2n+1}\,[C_2H_4O]_x\,[C_3H_7O]_y$

worin n vorzugsweise 1 bis 4, x eine Zahl von 15 bis 40,-vorzugsweise von 20 bis 30 und y eine Zahl von 5 bis 25, vorzugsweise von 8 bis 15 bedeutet.

Zur Verbesserung der Vernähbarkeit der ausgerüsteten Textilien eignen sich andererseits Polyether-Siloxan-Copolymere der Formel I mit einem Polyetherrest obenstehender Formel, worin n 2 bis 12, vorzugsweise 4 bis 8, x eine Zahl von 0 bis 25, vorzugsweise von 0 bis 15, und y eine Zahl von 5 bis 40, vorzugsweise von 10 bis 30 bedeutet.

Die im Rahmen der vorliegenden Erfindung einsetzbaren wäßrigen hochmolekularen Polyethylendispersionen sind in der Textilausrüstung allgemein bekannt und werden beispielsweise bei der Knitterfestausrüstung eingesetzt (vgl. z.B. EP-A- 518 917, BE-A- 618 648, Lindner "Tenside-Textilhilfsmittel-Waschrohstoffe", 2. Auflage (1964) Bd. 1, Seite 63).

Die Herstellung dieser Primärdispersionen geschieht im großtechnischen Maßstab durch direkte Emulsionspolymerisation des Ethylen unter erhöhtem Druck und in Anwesenheit von anionischen und gegebenenfalls nichtionogenen Emulgatoren.

Gebräuchliche anionische Emulgatoren sind z.B. die Alkalisalze der Alkylsulfonsäuren, der Alkylbenzolsulfonsäuren oder der höheren Fettsäuren. Vorzugsweise wird das Natriumsalz der Dodecylsulfonsäure benutzt.

Als gegebenenfalls zusätzlich eingesetzte nichtionogene Emulgatoren eignen sich besonders Alkyl-polyether oder Alkyl-aryl-polyether, wie beispielsweise die Polyether aus Dodecylalkohol oder Nonylphenol mit 7-20 Mol Ethylenoxid.

Im Rahmen der erfindungsgemäßen Herstellung werden bevorzugt gebräuchliche, im Handel erhältliche Polyethylen-Primärdispersionen eingesetzt. Ihr Feststoffgehalt liegt bei 30-45 %, das mittlere Molekulargewicht des Polyethylens zwischen 15 000 bis 50 000 und der mittlere Teilchendurchmesser zwischen 80 - 800 μm.

In der vorstehenden Angabe des Feststoffgehaltes ist der Emulgatoranteil mit etwa 2-10 Gewichtsprozent

inbegriffen.

Als Emulgatoren, die zur Herstellung der Silicon/Polyethylen/Wasser-Dispersionen Verwendung finden können, kommen sowohl anionische als auch nichtionogene bekannte grenzflächenaktive Verbindungen in Betracht. Bevorzugt werden wasserlösliche oder weitgehend wasserlösliche Produkte eingesetzt.

Beispiele aus der Gruppe der möglichen nichtionogenen Emulgatoren sind die bekannten Ethoxylierungsprodukte von Fettalkoholen, Fettsäuren, Fettsäureamiden, Fettsäuresorbitanestern und Alkylphenolen, wie

a) Polyoxyethylen-(7)-n-dodecylether
" (10)-n-dodecylether
" (10)-n-octadecylether
" (20)-n-octadecenylether
b) Polyoxyethylen-(7)-laurat
" (10)-myristat
" (20)-stearat
" (30)-oleat
c) Polyoxyethylen-(20)-stearylamid
d) Polyoxyethylen-(10)-sorbitanmonolaurat
" (15)-sorbitanmonostearat
" (20)-sorbitandioleat
" (30)-sorbitantrioleat
e) Nonyl-phenoxy-polyethylenglykol-(7)
" " " -(10)
" " " (20)
Dodecyl phenoxy " (30)
sowie Mischungen aus a) bis e).

Beispiele aus der Gruppe der möglichen anionischen Emulgatoren sind die Alkali- oder Aminsalze von Alkylsulfonsäuren, Alkanolschwefelsäurehalbestern, Arylsulfonsäuren, Alkylarylsulfonsäuren, Dialkylarylsulfonsäuren, wie die Natriumoder Aminsalze von

Dodecylsulfonsäure
Octadecylsulfonsäure
Dodecanol-schwefelsäurehalbester
Octadecenyl-schwefelsäurehalbester
Naphthalinsulfonsäure
Dodecylbenzolsulfonsäure
Dibutyl-naphthalinsulfonsäure.

Die Auswahl geeigneter Emulgatoren richtet sich jeweils nach der zu emulgierenden Polyethersiloxan-Komponente und nach den jeweils in der Polyethylendispersion bereits vorgegebenen (bei ihrer großtechnischen Herstellung) Emulgator-Anteilen.

Geht man beispielsweise von einer Polyethylendispersion aus, die unter Verwendung von Dodecylsulfat als Dispergiermittel hergestellt wurde, so ist es zweckmäßig, auch zur Voremulgierung der Polyethersiloxan-Komponente Dodecylsulfat als anionaktiven Emulgator einzusetzen.

Bei der Herstellung der Polyethersiloxan-Voremulsion ist es vorteilhaft, neben den anionaktiven Emulgatoren noch einen oder mehrere nichtionogene Emulgatoren einzusetzen. Letztere Maßnahme gewährleistet eine bessere Salzbeständigkeit der Silicon/Polyethylen/Wasser-Dispersionen bei ihrer praktischen Anwendung in der Textilausrüstung.

Nachstehend seien beispielhaft einige Emulgatoren aufgeführt, die sich für das erfindungsgemäße Verfahren vorteilhaft eignen:

Dodecylsulfat-Na, Dodecylsulfonat-Na und-Dodecylbenzolsulfonat-Na als anionaktive Emulgatoren sowie als nichtionogene Emulgatoren

Polyoxyethylen-(10)-dodecylether
Polyoxyethylen-(20)-octadecylether
Nonyl-phenoxy-polyethylenglykol-(7)
" " " -(10)
" " " -(20).

Die jeweils zur Anwendung kommenden Mengen an den genannten Emulgatoren richten sich weitgehend nach den zu emulgierenden Mengen an Polyethersiloxan und Polyethylen. Für 100 Gewichtsteile zu emulgierendes Polyethersiloxan oder Polyethylen (Festsubstanz) genügen gesamt 1-15 Gewichtsteile an anionaktiven und gegebenenfalls nichtionogenen Emulgatoren.

Beispielhaft seien genannt 3 Gew.-Teile anionaktive und gegebenenfalls 10 Gewichtsteile nichtionogene Emulgatoren für 100 Gewichtsteile Polyethersiloxan und 7 Gewichtsteile anionaktiver und gegebenenfalls 7 Gewichtsteile nichtionogene Emulgatoren für 100 Gewichtsteile Polyethylen.

Die genauen Mengen sind von Fall zu Fall durch Vorversuche leicht zu ermitteln.

Die Herstellung der Silicon/Polyethylen/Wasser-Dispersionen erfolgt durch langsames Vermischen der emulgatorhaltigen wäßrigen Voremulsion des vernetzten Polyethersiloxans mit der emulgatorhaltigen wäßrigen Dispersion des hochmolekularen Polyethylens bei Temperaturen von 20-60° C, indem man wie oben

näher beschrieben, entweder nach a) die emulgatorhaltige wäßrige Voremulsion des Polyethersiloxans vorlegt und unter stetigem Rühren die emulgatorhaltige wäßrige Polyethylendispersion langsam zulaufen läßt oder umgekehrt nach b) indem man die emulgatorhaltige wäßrige Polyethylen-Dispersion vorlegt und die emulgatorhaltige wäßrige Polyethersiloxan-Voremulsion langsam zulaufen läßt.

Bei dieser Verfahrensweise ist die Konzentration (bezogen auf Feststoff) der beiden zu mischenden wäßrigen Voremulsionen bzw. Dispersionen nicht kritsich, so lange es sich noch um dünnflüssige, gut rührfähige Emulsionen bzw. Dispersionen handelt.

Spezielle Rührvorrichtungen oder Homogenisatoren sind bei dem Verfahren nicht erforderlich, was als besonderer Vorteil angesehen werden muß.

Die auf diese Weise erhaltenen stabilen Silicon/Polyethylen/ Wasser Dispersionen können durch langsames Einrühren von weiteren Mengen Wasser auf eine beliebige Konzentration weiter verdünnt werden, z.B. zur Herstellung von Stammlösungen bei der praktischen Anwendung. Die obere Konzentrationsgrenze für noch gießfähige Silicon/Polyethylen/Wasser Dispersionen liegt bei etwa 55 % (Gewichts-%) an der Gesamtmenge Polyethersiloxan und Polyethylen.

Die oben beschriebenen vernetzten Polyethersiloxane vereinigen aufgrund ihrer sehr speziellen Struktur mehrere vorteilhafte Eigenschaften für ihre erfindungsgemäße Verwendung in sich:

Sie lassen sich im Gegensatz zu den in der Textilausrüstung heute gebräuchliche Methyl-polysiloxanen ohne besondere maschinelle Einrichtungen (z.B. Homogenisiermaschinen) in Wasser emulgieren und mit Polyethylen-Dispersionen vorteilhaft kombinieren, indem die Polyethersiloxane einen zusätzlichen stabilisierenden Effekt auf die hochdispersen Polyethylenteilchen ausüben. Auf diese Weise werden überraschenderwese sehr lagerstabile und temperaturstabile Silicon/Polyethylen/Wasser Dispersionen erhalten, wobei die Lagerzeiten im Temperaturbereich von 10-45° bei 1-1,5 Jahren liegen.

Zur Bereitung der Polyethersiloxan-Voremulsion legt man zweckmäßigerweise eine wäßrige Emulgator-Lösung vor, die 1-15 Gewichtsteile an anionaktiven und gegebenenfalls nichtionogenen Emulgatoren auf 100 Gewichtsteile zu emulgierendes Polyethersiloxan enthält, und läßt bei Temperaturen von 20-60°C das flüssige Polyethersiloxan unter Rühren langsam zulaufen. Man erhält eine weitgehend klare bis leicht trübe Voremulsion, deren Viskosität je nach ihrem Wassergehalt zwischen dünnflüssig bis pastenartig schwanken kann.

Als erfindungsgemäß verwendbare Polyethylen-Dispersionen setzt man zweckmäßigerweise handelsübliche, großtechnisch hergestellte Primärdispersionen hochmolekularer Polyethylene ein, die bereits oben eingehend beschrieben worden sind. Ihr Feststoffgehalt liegt erfahrungsgemäß bei 30-40 %, einschließlich des Emulgatoranteils.

Die erfindungsgemäßen wäßrigen Silicon/Polyethylen/Wasser Dispersionen können zusätzlich noch geringe Mengen antibakterieller Mittel gegen einen eventuellen Bakterienbefall enthalten, z.B. 0,1 % einer Formalinlösung.

Die erfindungsgemäßen Polyethersiloxan/Polyethylen-Dispersionen eignen sich in vielfältiger und sehr vorteilhafter Weise zur Verwendung bei der Veredelung von Textilgeweben und Gewirken sowie bei ihrer Färbung und Weißtönung.

Einige vorteilhafte Anwendungen seien nachstehend beispielhaft genannt.

Bei ihrer Anwendung im Foulard-Verfahren als Weichmachungs- und Griffverbesserungsmittel in der Nachbehandlung von Textilmaterialien aus Cellulosefaser und/oder Synthesefasern vereinigen sie die Vorteile von Mitteln auf Polydimethylsiloxan-Basis, wie hohe Glätte, Thermostabilität und geringe Vergilbungsneigung, mit den bekannten Vorzügen von Weichmachungsmitteln auf natürlicher Fettbasis, wie große Fülle, Saugfähigkeit und ausreichende Antistatik, ohne die bekannten Nachteile dieser klassischen Weichmachungsmittel aufzuweisen, wie Hydrophobie, ungenügende Wasserdampfdurchlässigkeit und Antistatik, mangelhafte Griff-Fülle (leerer Griff) einerseits und Thermoinstabilität, starker Vergilbungsneigung und negative Beeinflussung von Weißtönereffekten sowie bei Polyester-Dispersionsfärbungen erhöhte Thermomigration andererseits.

Bei der Ausrüstung von Elastomer-Fasermaterial (z.B. Miederwaren) verleihen die erfindungsgemäßen Mittel der Ware neben glatten, fülligen Griffeffekten und einer ausreichenden Hydrophilie, zusätzlich verbesserte technologische Daten, z.B. hinsichtlich Dehnbarkeit und Relaxationsverhalten, wodurch insgesamt verbesserte Trageeigenschaften erzielt werden.

Besonders hervorzuheben sind für den Fachmann eine wesentliche Verbesserung der Vernähbarkeit der ausgerüsteten Waren hinsichtlich einer Erniedrigung der Nadeltemperaturen und der Einstichkraft bei gleichzeitiger Verbesserung von Glätte und Griffcharakter (Weichheit).

Bemerkenswert ist ferner eine Herabsetzung der elektrostatischen Reibungsaufladung, d.h. einer verbesserten Antistatik, der damit ausgerüsteten Textilmaterialien.

Der Einsatz der erfindungsgemäßen Dispersionen als thermostabiler Textilweichmacher erlaubt kurze Trocknungszeiten und damit eine rationelle Arbeitsweise. Beispielsweise kann die Trocknung von Polyester-Geweben bei 180°C innerhalb von 30 Sekunden vorgenommen werden.

Die erfindungsgemäßen Produkte eignen sich ferner in hervorragender Weise bei Einsatz als Weichmachungsmittel für die einbadige Anwendung beim Färben oder Weißtönen von Textilmaterialien. Während beispielsweise durch Weichmachungsmittel auf Fettbasis die Echtheiten von Dispersionsfärbungen auf Polyester infolge Thermomigration stark beeinträchtigt werden, beeinflussen die erfindungsgemäßen Mittel die Thermomigration bei diesen Färbungen vergleichsweise nur geringfügig.

Ein überraschender Effekt wird auch bei der einbadigen Anwendung als Weichmachungsmittel im Rahmen der Weißtöner-Applikation erzielt. Während hierbei Produkte auf Fettbasis den Weißgrad bekanntlich deutlich erniedrigen, bewirken die erfindungsgemäßen Polyethersiloxan/Polyethylen-Dispersionen auf Polyester neben einer Verbesserung von Griff und Hydrophilie eine deutlich meßbare Erhöhung des Weißgrades.

Die nachfolgenden Beispiele sollen die Erfindung näher erläutern, ohne sie in ihrem Umfang einzuschränken. Prozentangaben bedeuten, wenn nicht anders vermerkt, Gewichtsprozente.

**Beispiel 1** (Herstellungsbeispiel für ein erfindungsge-

mäßes Behandlungsmittel)

**a) Herstellung eines Polyethersiloxans**

297 g (2 Mol) Methyltrichlorsilan werden mit 18 g (0,3 Mol) Perfluorbutansulfonsäure und anschließend mit 3996 g (13,5 Mol) Octamethylcyclotetrasiloxan versetzt. Das Gemisch wird anschließend auf 90°C aufgeheizt und innerhalb 2 Stunden mit 800 g (13,4 Mol) Essigsäure versetzt. Während der Zugabe wird weiter hochgeheizt, so daß nach vollendeter Zugabe (ECl-Strom versiegt) die Temperatur von 130°C erreicht wird. Es wird anschließend 2 Stunden bei 130°C gerührt.

Anschließend wird das produkt bei 130°C und 67 mbar ausgeheizt.

Ausbeute: 4000 g

Acetat: 137 mVal/100 g

Das nach obenstehender Beschreibung erhaltene Produkt wird auf folgende Weise weiter umgesetzt.

500 g (= 0,685 Val Acetat) eines Acetoxypolysiloxans mit n = 27 Dimethylsiloxyeinheiten werden mit 2000 g getrocknetem Toluol verrührt. Hierzu wird bei Raumtemperatur innerhalb von 15 Minuten ein Gemisch zugegeben, das aus 1477,3 g (0,79 Val) Polyether (mit einem Molgewicht von 1870 und einem Oxethylengehalt von 45 % und einem Oxpropylengehalt von 55 %, wobei 10 % des im Molekül enthaltenen Propylenoxids am Ende der auf Butanol gestarteten Molekülkette als Block, der Rest zusammen mit dem angegebenen Ethylenoxidanteil in statistischer Verteilung vorliegt), 10,35 g (0,23 Val)2,3-Butandiol und 1500 g getrocknetem Toluol besteht.

Ohne zu heizen werden bis zur Sättigung (mit ca. 8,67 g/h) innerhalb von ca. 2 Stunden 17,34 g getrockneter $NH_3$ eingeleitet. Anschließend wird innerhalb 30 Minuten auf 70°C aufgeheizt, wobei der Ammoniakstrom auf 11,9 g/h gesteigert wird. Es wird 90 Minuten weitergerührt und anschließend langsam abgekühlt. 30 Minuten nach Beginn der Abkühlphase wird der $NH_3$-Strom abgestellt.

Die durch Salz stark getrübte Lösung wird filtriert und aus dem Filtrat das Lösungsmittel bei max. 100°C und 20 mbar ausgeheizt. Man erhält einen klaren, leicht gelb gefärbten Rückstand.

Ausbeute: 1978 5 g

Viskosität: 640 mpa's $n^{20}_D = 1,4475$

**b) Herstellung der Polyethersiloxan-Emulsion**

Man erwärmt eine klare Lösung aus 3 g Dodecylsulfonat-Na und 270 g Wasser auf etwa 60-65°C und gießt bei Stillstand des Rührers 100 g Polyethersiloxan des Beispiels 1 so in die Flüssigkeit, daß die Gefäßwand des Rührgefäßes nicht mit dem Siloxan benetzt wird. Anschließend rührt man mit langsamer Rührgeschwindigkeit etwa 15 Minuten und kühlt dann die erhaltene trübe Emulsion unter Rühren auf 20°C ab.

**c) Herstellung des Behandlungsmittels**

Zu 373 g einer Polyethersiloxan-Emulsion, deren Herstellung oben beschrieben ist und die sich aus 26,8 Gew.-% des oben beschriebenen Polyethersiloxans 0,8 Gew.-% Dodecylsulfonat-Na und 72,4 Gew.-% Wasser zusammensetzt, läßt man bei einer Temperatur von 20-25°C 248 g Wasser (salzfrei) zulaufen. Während des Wasserzulaufs wird mit langsamer Rührgeschwindigkeit gerührt.

In die so erhaltene, leicht trübe Emulsion läßt man nun bei 20-25°C und weiterer langsamer Rührung 377 g einer Polyethylendispersion einlaufen, die 35 Gew.-% eines Polyethylens (mittleres Molgewicht 30 000) sowie 2,5 Gew.% Dodecylsulfonat-Na und 1,5 Gew.-% Nonylphenoxy-poly-ethylenglykol-(10) enthält. Nach 30 Minuten Rührzeit erhält man eine dünnflüssige, milchig-weiße Dispersion. Ein Lagerversuch über 1 Jahr bei 20-30°C Lagertemperatur zeigt keine Trennung oder Aufrahmung der Dispersion. Die Dispersion kann auch nach dieser Lagerzeit mit Wasser verdünnt werden.

Die eingesetzte polyethylendispersion ist eine im Handel üblicherweise erhältliche Dispersion für die Knitterfestausrüstung.

**Beispiel 2** (Herstellungsbeispiel für ein erfindungsge-

mäßes Behandlungsmittel)

**a) Herstellung eines Polyethersiloxans**

149 5 g (1 Mol) Methyltrichlorsilan werden mit 9 g (0,15 Mol) Perfluorbutansulfonsäure und anschließend mit 2220 g (7,5 Mol) Octamethylcyclotetrasiloxan versetzt. Das Gemisch wird anschließend auf 90°C aufgeheizt und innerhalb 2 Stunden mit 450 g (7,5 Mol) Essigsäure versetzt. Während der Zugabe wird weiter hochgeheizt, so

daß nach beendeter Zugabe (HCl-Strom versiegt) eine Temperatur von 130°C erreicht wird. Anschließend wird weitere 2 Stunden bei 130°C gerührt.

Das Reaktionsprodukt wird bei 130°C und 67 mbar ausgeheizt.

Ausbeute: 2250 g

Acetat: 123 mVal/100 g

Das nach vorhergehender Beschreibung erhaltene Produkt wird auf folgende Weise weiter umgesetzt.

500 g (= 0,61 Val Acetat) eines Acetoxypolysiloxans mit n = 30 Dimethylsiloxyeinheiten werden mit 2000 g getrocknetem Toluol gemischt und hierzu innerhalb von 15 Minuten ein Gemisch zugegeben, das aus 667 g (0,38 Val) Polyether (mit einem Molgewicht von 1760, einem Oxethylengehalt von 42 % und einem Oxpropylengehalt von 58 %, wobei das im Molekül enthaltene Ethylenoxid am Ende der auf Butanol gestarteten Molekülkette als Block, und der angegebene Propylenoxidanteil darauf folgend als Block am Ende der Hydroxylgruppe vorliegt), 10,35 g (0,23 Val) 2,3-Butandiol und 1500 g getrocknetem Toluol besteht. Ohne zu heizen werden bis zur Sättigung (mit ca. 8,7 g/h) innerhalb von ca. 2 Stunden 17,4 g getrockneter $NH_3$ eingeleitet. Anschließend wird innerhalb von 30 Minuten auf 70°C aufgeheizt, wobei der Ammoniakstrom auf ca. 12 g/h gesteigert wird. Es wird weitere 90 Minuten wietergerührt und anschließend langsam abgekühlt. 30 Minuten nach Beginn der Abkühlphase wird der $NH_3$-Strom abgestellt.

Die durch Salz stark getrübte Lösung wird filtriert und aus dem Filtrat das Lösungsmittel bei max. 100°C und 20 mbar ausgeheizt. Man erhält einen klaren, leicht gelb gefärbten Rückstand.

Ausbeute: 1140 g

Viskosität: 1330 mpa.s $n_D^{20}$ = 1.4474

**b) Herstellung der Polyethersiloxan-Emulsion**

Man erwärmt eine klare Lösung aus 3 g Dodecylsulfcnat-Na und 270 g Wasser auf etwa 60-65°C und gießt bei Stillstand des Rührers 100 g Polyethersiloxan des Beispiels 2 so in die Flüssigkeit, daß die Gefäßwand des Rührgefäßes nicht mit dem Siloxan benetzt wird. Anschließend rührt man mit langsamer Rührgeschwindigkeit etwa 15 Min. und kühlt dann die erhaltene trübe Emulsion unter Rühren auf 20°C ab.

**c) Herstellung des Behandlungsmittels**

Das Behandlungsmittel wird analog zu dem in Beispiel 1 beschriebenen Verfahren hergestellt.

Zu 377 g einer Polyethylendispersion, deren Zusammensetzung im Beispiel 1 angegeben ist, fügt man bei 20-30°C unter langsamer Rührung 248 g Wasser. Zu der erhaltenen milchig-weißen Dispersion läßt man nun unter weiterer langsamer Rührung bei 20-30°C 373 g einer Polyethersiloxan-Emulsion, deren Zusammensetzung aus dem Beispiel 1 ersichtlich ist, langsam zufließen.

Die so erhaltene milchig-weiße Dispersion weist ebenfalls die im Beispiel 1 beschriebene hohe Lagerbeständigkeit auf.

**Beispiel 3** (Herstellungsbeispiel für ein erfindungsge-

mäßes Behandlungsmittel)

**a) Herstellung eines Polyethersiloxans**

0,79 kg Methyltrichlorsilan (5,28 Mol), 22,2 kg Octamethylcyclotetrasiloxan (75 Mol) und 70 g Perfluorbutylsulfonsäure werden in einem Gefäß vorgelegt und auf 60°C erwärmt. Ab 60°C werden innerhalb einer Stunde 4,2 kg Essigsäure (70 Mol) zugegeben. Nach beendeter Zugabe der Essigsäure wird der Kesselinhalt bis zu einer Sumpftemperatur von 125 bis 130°C aufgeheizt.

Bei dieser Temperatur wird dann weitere 5 Stunden lang gerührt. Danach wird die Reaktionsmischung auf unter 50°C abgekühlt und vorsichtig der Druck auf 50 mbar reduziert. Die in der Reaktionsmischung enthaltenen Leichtsieder werden nun bis zu einer Sumpftemperatur von maximal 135°C und einem Endvakuum von ca. 20 mbar ausgeheizt.

Ausbeute: Ca. 22 kg transparentes Produkt mit einer Viskosität von ca. 50 mPa's

Acetat: 67,5 mVal/100 g

Das nach obenstehender Beschreibung erhaltene Produkt wurde auf folgende Weise weiter umgesetzt:

15 kg des erhaltenen Acetoxysiloxans werden in einem Kessel zusammen mit 15 kg Toluol vorgelegt. Bei Raumtemperatur wird separat eine Mischung aus 18,8 kg eines auf Butanol gestarteten Polyethers (mit einem Molgewicht von 1820, einem Oxethylengehalt von 15 % und einem Oxpropylengehalt von 85 %, wobei der gesamte enthaltene Oxethylengehalt unmittelbar auf das Startermolekül folgend als Blockeinheit vorliegt) und 25 kg Toluol hergestellt und unter kräftigem Rühren in ca. 15 Min. zu der vorgelegten Mischung zulaufen gelassen. Dann werden während 45 Minuten 172 g $NH_3$ eingeleitet (325 l/h). Die Mischung wird nun auf 80°C erwärmt. Wenn diese Temperatur erreicht ist, werden 90 g Isopropanol zur Reaktionsmischung zugesetzt und man rührt weitere 3 Stunden lang bei 80°C und leitet während dieser Zeit $NH_3$ bis zur Sättigung der Reaktionsmischung ein.

Das Produkt wird auf Raumtemperatur abgekühlt, und die durch Salz getrübte Lösung filtriert und aus dem Filtrat das Lösungsmittel bei max. 100°C und 20 mbar abdestilliert. Man erhält einen klaren, leicht gelb gefärbten Rückstand.

**b) Herstellung einer Polyethersiloxan-Emulsion**

Man erwärmt eine klare Lösung aus 3 g Dodecylsulfonat-Na und 270 g Wasser auf etwa 60-65°C und gießt

bei Stillstand des Rührers 100 g Polyethersiloxan des Beispiels 3 so in die Flüssigkeit, daß die Gefäßwand des Rührgefäßes nicht mit dem Siloxan benetzt wird. Anschließend rührt man mit langsamer Rührgeschwindigkeit etwa 15 Minuten und kühlt dann die erhaltene trübe Emulsion unter Rühren auf 20°C ab.

**c) Herstellung des Behandlungsmittels**

Zu 377 g einer Polyethylendispersion, deren Zusammensetzung im Beispiel I angegeben ist, fügt man bei 20-30°C unter langsamer Rührung 248 g Wasser. Zu der erhaltenen milchig-weißen Dispersion läßt man nun unter weiterer langsamer Rührung bei 20-30°C langsam 373 g der oben beschriebenen polyethersiloxan-Emulsion zufließen.

Die so erhaltene milchig-weiße Dispersion weist ebenfalls die im Beispiel 1 beschriebene hohe Lagerbeständigkeit auf.

**Beispiel 4**

a) Herstellung eines Polyethersiloxans nach Beispiel 1

**b) Herstellung der Polyethersiloxan-Emulsion**

Man erwärmt eine klare Lösung aus 6 g Dodecylbenzolsulfonat-Na-Salz und 117 g Wasser auf etwa 60-65 °C und gießt bei Stillstand des Rührers 250 g Polyethersiloxan des Beispiels 1 so in die Flüssigkeit, daß die Gefäßwand des Rührgefäßes nicht mit dem Siloxan benetzt wird. Anschließend rührt man mit langsamer Rührgeschwindigkeit etwä 15 Minuten nach und kühlt dann die erhaltene trübe Emulsion auf 20°C ab.

**c) Herstellung des Behandlungsmittels**

Zu 627 g einer Polyethylendispersion, deren Zusammensetzung im Beispiel 1 beschrieben ist, läßt man - ohne weiteren Wasserzusatz - unter langsamer Ruhrung bei 20-30°C langsam 373 g der vorstehend beschriebenen polyethersiloxan-Emulsion zufließen.

Man erhält eine dickflüssige, milchig-weiße Dispersion mit guter Lagerstabilität.

**Beispiel 5** (Griffgebung)

Verschiedene Fasersubstrate (Cellulosefasern, Po¹yester-fasern, Polyamidfasern, Wolle und eine Mischung aus Polyester/Wolle (65-35)) wurden nach zwei unterschiedlichen Applikationsverfahren ausgerüstet:

A) Nach dem Foulard-Verfahren (10-30 g Ausrüstungsmittel/l, Flottenaufnahme: 70 bis 100 %, pH-Wert der Flotte: 5-7, Flottentemperatur: 20 bis 40°C)

B) Applikation aus langer Flotte (Auszieh-Verfahren) (Flottenverhältnis: 1:8 bis 1:30, 1-3 % Ausrüstungsmittel (bezogen auf das trockene Fasergewicht), pH-Wert der Flotte: 5-7, Ausziehzeit: 15-20 Minuten, Temperatur: 30-40°C)

Für Vergleichszwecke wurde ein handelsüblicher Silicon-Weichmacher auf Basis Polymethylsiloxan und/oder ein handelsüblicher Weichmacher auf Fettsäureamidbasis eingesetzt, wobei die Einsatzmengen jeweils so gewählt wurden, daß die Anwendungsflotten gleiche Mengen an Ausrüstungsmitteln - bezogen auf ihr Trockengewicht - enthielten.

Nach erfolgter Applikation wurde das Fasersubstrat bei Temperaturen zwischen 80 und 120°C getrocknet und anschließend bei 65 % relativer Feuchte und 23° klimatisiert.

Im Anschluß hieran wurden aus dem Fasersubstrat für die einzelnen prüfverfahren Prüflinge geschnitten.

Die Beurteilung des Griffeffektes (Weichheit, Volumen, Glätte) erfolgt durch direkten Vergleich zweier oder mehrerer Prüflinge gegen eine Nullprobe oder gegen Standard, wobei im subjektiven Paarvergleichsverfahren das weichere Substrat jeweils eines Paares herausgesucht wird, wobei eine Benotung von 1 bis 5 erfolgt.

Mit 1 wird das weichste, mit 5 das rauheste Substrat gekennzeichnet. Diese Klassifizierung erfolgt an den gleichen Proben durch mindestens 5 entsprechend geschulte Personen.

Die folgende Tabelle 1 legt das Prüfungsergebnis dar:

**Tabelle 1** Griffeffekte nach Foulard- und Auszieh-Applikation

**Foulard-Ausrüstung**

| Substrat | | | | |
|---|---|---|---|---|
| Mittel des Beispiels 20 g/l; 80 % Flottenaufnahme | Cellulose | Polyamid | Polyester | Polyester/Wolle (65:35) |
| 1 | 2 | 1 | 1 | 2 |
| 2 | 2 | 1 | 1 | 2 |
| 3 | 2 | 1 | 1 | 2 |
| Vergleich: ohne Ausrüstung | 5 | 5 | 5 | 5 |
| mit handelsüblichem Silicon-Weichmacher auf Basis Polymethylsiloxan | Im Vergleich zu Mittel 1-3 zeigen die Fasersubstrate zwar eine etwas höhere Glätte, aber eine deutlich geringere Griff-Fülle (leerer Griff). | | | |
| Auszieh-Verfahren 3 %; Flotte 1:20 | Cellulose | Polyamid | Polyester | Polyester/Wolle (65:35) |
| 1 | 3 | 1 | 1 | 3 |
| 2 | 3 | 1 | 1 | 3 |
| 3 | 3 | 1 | 1 | 3 |
| Vergleich: ohne Ausrüstung | 5 | 5 | 5 | 5 |
| mit handelsüblichem Weichmacher auf Basis Polymethylsiloxan | Infolge des schlechten Aufziehvermögens aus langer Flotte bei Cellulose, Polyamid und Polyester/Wolle wird eine wesentlich geringere Griff-Fülle im Vergleich zu Mittel 1-3 gefunden. | | | |

**Beispiel 6** (Weißgraderhöhung)

Verschiedene Fasersubstrate wurden mit den erfindungsgemäßen Mitteln gemäß den Angaben des Beispiels 5 im Foulard-Verfahren, Flottenaufnahme 70 %, Trocknung bei 100°C, mit den nachstehend angegebenen Einsatzmengen ausgerüstet, getrocknet und klimatisiert. Die Bestimmung des Weißgrades erfolgte an den behandelten Prüflingen gemäß der Methode von Berger.

Verglichen wird der Weißgrad mit einem des jeweiligen Substrates, jeweils ausgerüstet mit einem handelsüblichen optischen Aufheller auf Basis von Stilbenderivaten, mit und ohne Zusatz des erfindungsgemäßen Ausrüstungsmittels.

Ferner wird ein Vergleich mit einem handelsüblichen Weichmacher auf Basis Fettsäureamid, entsprechend dem Stand der Technik aufgezeigt:

Weißgrad nach
A) <u>Cellulosefasern</u> Berger
1. Mit 6 g/l optischem Aufheller 147,0
behandelt
2. Mit 6 g/l optischem Aufheller
+ 25 g/l Ausrüstungsmittel
gemäß Beispiel 1 (=25 % Trockenge
wicht) 152,0
behandelt
3. Mit 6 g/l optischem Aufheller
+ 25 g/l eines handelsüblichen
Ausrüstungsmittels auf Fettsäure
amidbasis (25 % Trockengewicht) 140,0
behandelt
B) <u>Polyamid</u>
1. Mit 20 g/l optischem Aufheller 116,2
behandelt
2. Mit 20 g/l optischem Aufheller
+ 25 g/l Ausrüstungsmittel
gem. Beispiel 1 122,7
B) <u>Polyamid</u> (Fortsetung) Weißgrad nach
Berger
3. Mit 20 g/l optischem Aufheller
+ 25 g/l eines handelsüblichen
Ausrüstungsmittels auf Fettsäure
amidbasis (25 % Trockengewicht) 114,0
behandelt
C) <u>Polyester</u>
1. Mit 10 g/l optischen Aufheller
behandelt 111,5
2. Mit 10 g/l optischem Aufheller
+ 25 g/1 Ausrüstungsmittel
gemäß Beispiel 1 behandelt 117,5
3. Mit 10 g/1 optischem Aufheller
+ 25 g/l eines handelsüblichen
Ausrüstungsmittels auf Fettsäure
amidbasis (25 % Trockengewicht) 109
behandelt-

**Beispiel 7** (Vernähbarkeit)

Die untersuchten Fasersubstrate wurden mit den erfindungsgemäßen Behandlungsmitteln gemäß den Angaben des Beispiels 5 aus langer Flotte (1:30), pH-Wert 4-6, Behandlungszeit 15-20 Minuten bei einer Flottentemperatur von 20-40°C ausgerüstet, getrocknet und klimatisiert. Zur Ermittlung der Vernähbarkeitseigenschaften werden die Prüflinge mit einer Nähmaschine ohne Nähfaden vernäht. Die dabei gemessene Einstichkraft und Nadeltemperatur dienen als Maß für das Nähverhalten des ausgerüsteten Textilmaterials.

Nähmaschine : Fabrikat SINGER, Typ 770 Di
Geschwindigkeit: 5150 Stiche/min
Nähnadel: Singer 1901/90
Prüfling: 4 Lagen
Prüflänge: 1 m

Die angegebenen Zahlenwerte sind Durchschnittswerte aus jeweils 10 Einzelmessungen.

A) Cellulosefasern

| | Einstichkraft (k) | Nadeltemperatur (°C) |
|---|---|---|
| 1. Nur gefärbte Ware | 1,00 | 291 |
| 2. + 3 % handelsübliches Weichmachungsmittel auf Fettsäureamidbasis (25 % Trockengewicht) | 0,75 | 269 |
| 3. + 3 % Ausrüstungsmittel gemäß Beispiel 1 | 0,50 | 178 |
| 4. + 3 % Ausrüstungsmittel gemäß Beispiel 2 | 0,70 | 198 |
| 5. + 3 % Ausrüstungsmittel gemäß Beispiel 3 | 0,60 | 170 |

B) Wolle/Polyester (35:65)

| | Einstichkraft (k) | Nadeltemperatur (°C) |
|---|---|---|
| 1. Nur gefärbte Ware | 1,10 | 260 |
| 2. + 3 % handelsüblichem Weichmachungsmittel auf Fettsaurebasis (25 % Trockengewicht) | 0,85 | 250 |

B) Wolle/Polyester (35:65) Fortsetzung

| | Einstichkraft (k) | Nadeltemperatur (°C) |
|---|---|---|
| 3. + 3 % Ausrüstungsmittel gemäß Beispiel 1 | 0,31 | 170 |
| 4. + 3 % Ausrüstungsmittel gemäß Beispiel 2 | 0,30 | 170 |
| 5. + 3 % Ausrüstungsmittel gemäß Beispiel 3 | 0,26 | 170 |

**Beispiel 8** (Antielektrostatik)

Das untersuchte Fasersubstrat wurde mit den erfindungsgemäßen Behandlungsmitteln gemäß den Angaben des Beispiels 5 im Foulardverfahren mit jeweils 10 g/l des Ausrüstungsmittels und einer Flottenaufnahme von 80 % ausgerüstet, getrocknet und bei 23°C und 45 % relativer Luftfeuchtigkeit klimatisiert.

Nach Trocknung und Klimatisierung wurden die antielektrostatischen Eigenschaften durch Messung des Oberflächenwiderstandes jeweils an 2 Textilmustern nach DIN 54 345, Blatt 1, und der Reibungsaufladung nach DIN 53 486 ermittelt.

Als Vergleich wurden die in gleicher Weise und mit gleichen Mengen vorgenommenen Ausrüstungen unter Verwendung eines handelsüblichen Weichmachers auf Basis Fettsäureamid bzw. eines handelsüblichen Weichmachers auf Silicon-Basis gemessen.

| Textilmuster | Oberflächenwiderstand $R_{OA}$ [Ω] | Reibmittel Gewebe aus | Endaufladung $\frac{kV}{m}$ | Anzahl der Reibvorgänge | Halbwertszeit $t_n$ [sec.] |
|---|---|---|---|---|---|
| 1. Nur eingefärbte Ware | $2.10^{13}$ | PA | - 340 | 50 | 600 |
| | $2.10^{13}$ | PAC | - 640 | 50 | 600 |
| 2. Erfindungsgem. Mittel nach Beispiel 1 | $7.10^{10}$ | PA | 2 | 10 | 1 |
| | $6.10^{10}$ | PAC | 3 | 10 | 2 |
| 3. Erfindungsgem. Mittel nach Beispiel 2 | $2.10^{10}$ | PA | 2 | 10 | 1 |
| | $2.10^{10}$ | PAC | 2 | 10 | 1 |
| 4. Erfindungsgem. Mittel nach Beispiel 3 | $7.10^{10}$ | PA | - 3 | 50 | 2 |
| | $6.10^{10}$ | PAC | 4 | 25 | 2 |
| 5. Handelsüblicher Fettsäureamid-Weichmacher | $3.10^{12}$ | PA | 200 | 30 | 400 |
| | $1.10^{12}$ | PAC | 150 | 30 | 400 |
| 6. Handelsüblicher Silicon-Weichmacher | $10^{13}$ | PA | 2 | 10 | 1 |
| | $10^{13}$ | PAC | 3 | 10 | 1 |

**Beispiel 9** (Echtheitskonstanz)

Das untersuchte Fasersubstrat wurde gemäß den Angaben des Beispiels 5 im Foulardverfahren mit 10 g/l Ausrüstungsmittel (25 % Trockengewicht) und einer Flottenaufnahme von 80 % ausgerüstet, bei 100°C getrocknet, bei 170°C während 30 sec. fixiert und anschließend klimatisiert. Die Beurteilung erfolgt im Vergleichsverfahren durch Graumaßstab nach DIN 54 002, wobei eine Benotung von 1 bis 5 vorgenommen wird.

Note 5: keine Beeinflussung der Farbechtheit

Note 1: deutliche Beeinflussung der Farbechtheit Note

| | | Note |
|---|---|---|
| A) | Polyesterfärbung mit handelsüblichem Dispersionsfarbstoff und reduktiver Nachbehandlung, ohne zusätzliches Ausrüstungsmittel | 4-5 |
| B) | Polyesterfärbung wie unter A) und reduktiver Nachbehandlung, + 10 g/l Weichmachungsmittel auf Basis von Fettsäureamid (25 % Trockengewicht) | 2-3 |
| C) | Polyesterfärbung wie unter A) und reduktiver Nachbehandlung, + 10 g/l erfindungsgemäßes Ausrüstungsmittel nach Beispiel 1 | 3-4 |

**Beispiel 10** (Saugfähigkeit)

Das untersuchte Testmaterial (Woll-Gewebe, vorgereinigt) wurde gemäß den Angaben des Beispiels 5 im Foulard-Verfahren mit 80 % Flottenaufnahme ausgerüstet, getrocknet und klimatisiert (bei 23°C und 65 % relativer Luftfeuchtigkeit).

Hiernach wurde die Sauggeschwindigkeit nach dem Steighöhenprinzip gemäß DIN 53 924 bestimmt. Das Maß für die Sauggeschwindigkeit ist die Steighöhe der Prüfflüssigkeit im Substat nach verschiedenen Zeitabschnitten.

| | | Steighöhe nach 2 min (mm) | Steighöhe nach 5 min (mm) |
|---|---|---|---|
| A) | Vorgereinigte Ware unbehandelt | 0 | 0 |
| B) | Vorgereinigte Ware, behandelt mit 20 g/l handelsüblichem Weichmacher auf Basis von Fettsäureamid-Ethylenoxid-Addukt (25 % Trockengewicht) | 0 | 0 |
| C) | Vorgereinigte Ware, behandelt mit 20 g/l erfindungsgem. Mittel nach Beispiel 1 | 45 | 55 |

**Beispiel 11** (Hitzestabilisierung)

Das untersuchte Testmaterial (Baumwolle Maschen-Rohware) wurde gebleicht und anschließend heiß und kalt gespült. Im Anschluß daran wurden verschiedene Muster der so vorbehandelten Ware wie folgt behandelt:

A) Weißtönen mit handelsüblichem Stilbenderivat, nach dem Ausziehverfahren bei pH 6 (15'/40°C), 10 Min. bei 80°C vortrocknen.

B) Weißtönen mit handelsüblichem Stilbenderivat, gleichzeitig Zusatz von 3 % eines handelsüblichen Fettsäureamid-20-ethoxylat-Weichmachers (25 % Trockengewicht) nach dem Ausziehverfahren bei pH 6 (15'/40°C), 10 Min. bei 80°C vortrocknen.

C) Weißtönen mit handelsüblichem Stilbenderivat, gleichzeitig Zusatz von 3 % des erfindungsgemäßen Behandlungsmittels nach Beispiel 1 nach dem Ausziehverfahren bei pH 6 (15'/40°C), 10 Min. bei 80°C vortrocknen.

Nach der sich anschließenden Klimatisierung wurden die Muster bei unterschiedlichen Temperaturen nachgetrocknet und der Weißgrad nach Berger gemessen.

| | Weißgrad nach Berger | | |
|---|---|---|---|
| Nachbehandlungs-temperatur | A | B | C |
| nicht nachgetrocknet | 149,9 | 144,3 | 146,5 |
| 30"/120°C nachgetrocknet | 145,5 | 140,1 | 144,3 |
| 30"/140°C " | 140,2 | 135,7 | 144,5 |
| 30"/160°C " | 135,0 | 135,5 | 145,5 |

**Patentansprüche**

1. Wäßrige Dispersion enthaltend

A) 1-30 Gew.-Teile eines über Alkylenoxy-Brückenvernetzten Polyethersiloxans der allgemeinen Formel

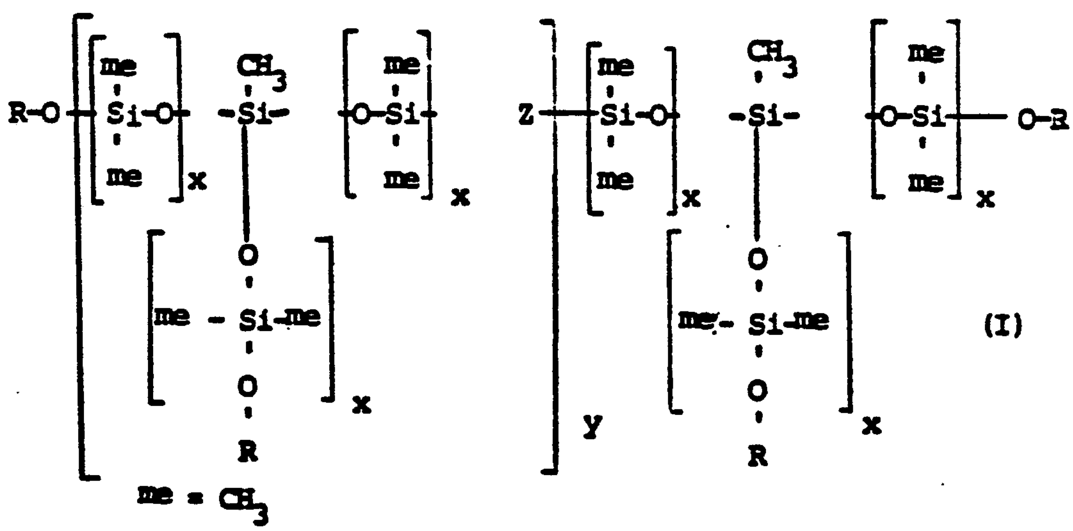

(I)

me = $CH_3$

wobei Z für einen zweiwertigen Alkylenoxyrest mit 2-8 C-Atomen, bevorzugt den Butylenoxyrest,
R für einen Polyetherrest,
X für einen Wert zwischen 2 und 25
Y für einen Wert zwischen 1 und 9 steht,
B) 1-40 Gew.-Teile eines hochmolekularen Polyethylens mit einem mittleren Molgewicht von 15 000 - 50 000,
C) 1-10 Gew.-Teile eines anionischen Emulgators,
D) 0-15 Gew.-Teile eines nicht-ionogenen Emulgators und
E) 2-97 Gew.-Teile Wasser.

2. Verfahren zur Herstellung der wäßrigen Dispersionen gemäß Anspruch 1, dadurch gekennzeichnet, daß man eine wäßrige Polyethylendispersion, die 5-40 Gew.-% Polyethylen sowie 1-10 Gew.-% anionische Emulgatoren sowie gegebenenfalls noch 1-15 Gew.-% nichtionogene Emulgatoren enthält mit einer Mischung bestehend aus 8-90 Gew.-% eines vernetzten Polyethersiloxans der Formel I, 0,1-18 Gew.-% anionische und gegebenenfalls nicht-ionischen Emulgatoren sowie 1-92 % Wasser versetzt.

3. Verfahren zur Herstellung der wäßrigen Dispersionen nach Anspruch 1, dadurch gekennzeichnet, daß man eine Emulsion, bestehend aus 8-90 Gew.-% eines vernetzten polyethersiloxans der Formel I, 0,1-18 Gew.-% anionischer und gegebenenfalls nicht-ionischer Emulgatoren sowie 1-92 Gew.-% Wasser vorlegt und mit einer wäßrigen Polyethylendispersion vermischt, die 5-40 Gew.-% polyethylen sowie 1-10 Gew.-% anionische Emulgatoren sowie gegebenenfalls noch 1-15 Gew.-% nichtionogene Emulgatoren enthält.

4. Verwendung von wäßrigen Dispersionen gemäß Anspruch 1 zur Behandlung von textilen Materialien.

5. Verwendung von wäßrigen Dispersionen gemäß Anspruch 4, die vorzugsweise 5-15 Gew.-% eines Polyethersiloxans der Formel I und 5-20 Gew.-% eines Polyethylens sowie anionische Emulgatoren enthalten.

6. Verwendung von wäßrigen Dispersionen gemäß Anspruch 4 zur Ausrüstung von textilen Materialien im Foulardund Aufziehverfahren.

**Revendications**

1. Dispersion aqueuse contenant
A) 1-30 parties en poids d'un polyéthersiloxane réticulé par des ponts alkylèneoxy, de formule générale

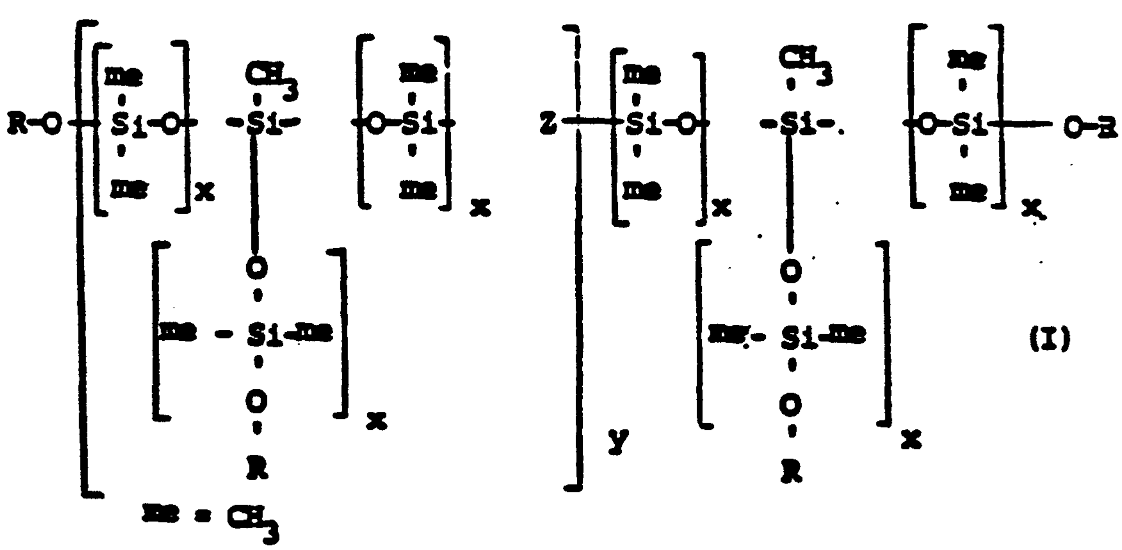

(I)

dans laquelle Z désigne un reste alkylèneoxy divalent ayant 2 à 8 atomes de carbone, de préférence le reste butylèneoxy,
R est un reste polyéther,
x a une valeur de 2 à 25,
y a une valeur de 1 à 9,
B) 1 à 40 parties en poids d'un polyéthylène de haut poids moléculaire ayant un poids moléculaire moyen de 15 000 à 50 000,
C) 1 à 10 parties en poids d'un émulsionnant anionique,
D) 0 à 15 parties en poids d'un émulsionnant non ionogène et
E) 2 à 97 parties en poids d'eau.

2. Procédé de production de dispersions aqueuses suivant la revendication 1, caractérisé en ce qu'on ajoute à une dispersion aqueuse de polyéthylène qui contient 5 à 40 % en poids de polyéthylène ainsi que 1 à 10 % en poids d'émulsionnants anioniques de même que, le cas échéant, encore 1 à 15 % en poids d'émulsionnants non ionogènes, un mélange formé de 8 à 90 % en poids d'un polyéthersiloxane réticulé de formule I, 0,1 à 18 % en poids d'émulsionnants anioniques et, le cas échéant, d'émulsionnants non ioniques ainsi que 1 à 92 % d'eau.

3. Procédé de production de dispersions aqueuses suivant la revendication 1, caractérisé en ce qu'on introduit tout d'abord une émulsion formée de 8 à 90 % en poids d'un polyéthersiloxane réticulé de formule I, 0,1 à 18 % en poids d'émulsionnants anioniques et, le cas échéant, non ioniques ainsi que 1 à 92 % en poids d'eau et on la mélange avec une dispersion aqueuse de polyéthylène qui contient 5 à 40 % en poids de polyéthylène ainsi que 1 à 10 % en poids d'émulsionnants anioniques de même que, le cas échéant, encore 1 à 15 % en poids d'émulsionnants non ionogènes.

4. Utilisation de dispersions aqueuses suivant la revendication 1 pour le traitement de matières textiles.

5. Utilisation de dispersions aqueuses suivant la revendication 4 qui contiennent de préférence 5 à 15 % en poids d'un polyéthersiloxane de formule I et 5 à 20 % en poids d'un polyéthylène ainsi que des émulsionnants anioniques.

6. Utilisation de dispersions aqueuses suivant la revendication 4, pour l'apprêtage de matières textiles par le procédé de foulardage et d'absorption.

**Claims**

1. Aqueous dispersion containing

A) 1-30 parts by weight of a polyether-siloxane, crosslinked via alkylenoxy bridges, of the general formula

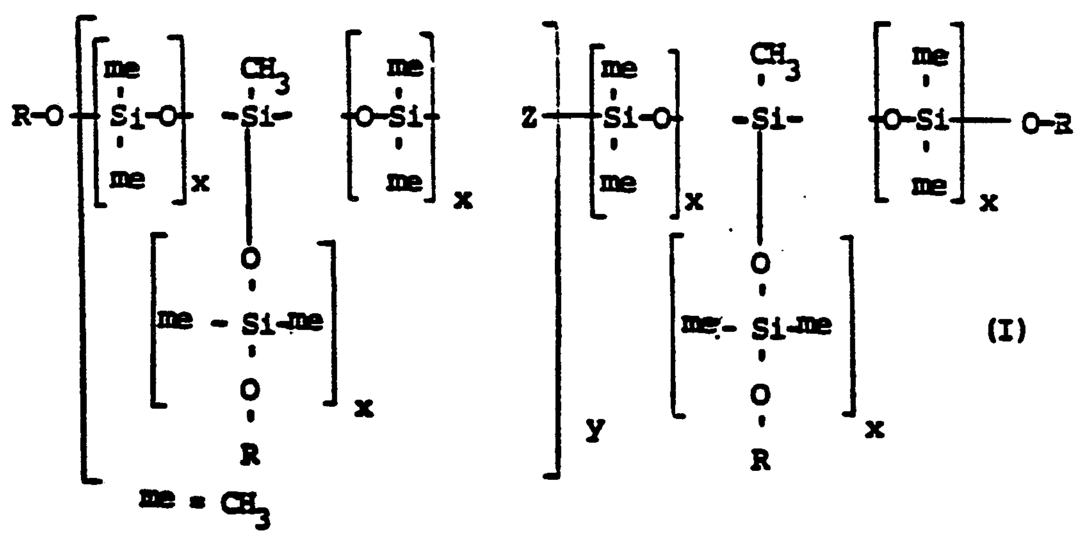

(I)

me = $CH_3$

wherein

Z represents a divalent alkylenoxy radical with 2-8 C atoms, preferably the butylenoxy radical,

R represents a polyether radical,

X represents a value between 2 and 25 and

Y represents a value between 1 and 9,

B) 1-40 parts by weight of a high-molecular polyethylene with an average molecular weight of 15,000-50,000,

C) 1-10 parts by weight of an anionic emulsifier,

D) 0-15 parts by weight of a non-ionic emulsifier and

E) 2-97 parts by weight of water.

2. Process for the preparation of the aqueous dispersions according to Claim 1, characterised in that a mixture consisting of 8-90% by weight of a crosslinked polyether-siloxane of the formula I, 0.1-18% by weight of anionic and, if appropriate, non-ionic emulsifiers and 1-92% by weight of water is added to an aqueous polyethylene dispersion containing 5-40% by weight of polyethylene and 1-10% by weight of anionic emulsifiers, and if appropriate also 1-15% by weight of non-ionic emulsifiers.

3. Process for the preparation of the aqueous dispersions according to Claim 1, characterised in that an emulsion consisting of 8-90% by weight of a crosslinked polyether siloxane of the formula 1, 0.1-18% by weight of anionic and, if appropriate, non-ionic emulsifiers and 1-92% of water is initially introduced and mixed with an aqueous polyethylene dispersion containing 5-40% by weight of polyethylene and 1-10% by weight of anionic emulsifiers and, if appropriate, also 1-15% by weight of non-ionic emulsifiers.

4. Use of aqueous dispersions according to Claim 1 for the treatment of textile materials.

5. Use of aqueous dispersions according to Claim 4, which preferably contain 5-15% by weight of a polyethersiloxane of the formula I and 5-20% by weight of a polyethylene as well as anionic emulsifiers.

6. Use of aqueous dispersions according to Claim 4 for finishing textile materials by the padding and exhaustion method.